# EUROPÄISCHE PATENTSCHRIFT

(11) **EP 4 402 383 B1**
(45) Veröffentlichungstag und Bekanntmachung des Hinweises auf die Patenterteilung: **06.08.2025**
(21) Anmeldenummer: 22772492.9
(22) Anmeldetag: 01.09.2022
(51) Int. Cl.: F16B 13/00, F16B 13/08

(54) **SELBSTSCHNEIDENDER HINTERSCHNITTANKER**
SELF-CUTTING UNDERCUT ANCHOR
DISPOSITIF D'ANCRAGE À CONTRE-DÉPOUILLE AUTO-TARAUDANT

(30) Priorität: 14.09.2021 DE 102021123741; 16.12.2021 DE 102021133386
(43) Veröffentlichungstag der Anmeldung: 24.07.2024
(73) Patentinhaber: fischerwerke GmbH & Co. KG, 72178 Waldachtal (DE)
(72) Erfinder: ECHLE, Benjamin, 77776 Schapbach (DE); LINKA, Martin, 72160 Horb a.N. (DE); LEHMANN, David, 72275 Alpirsbach (DE)
(86) Internationale Anmeldenummer: PCT/EP2022/074286
(87) Internationale Veröffentlichungsnummer: WO 2023/041335

(56) Entgegenhaltungen:
- EP-B1- 0 217 053
- DE-A1- 102004 053 255

## Beschreibung

Die Erfindung betrifft einen selbstschneidenden Hinterschnittanker mit den Merkmalen des Oberbegriffs des Anspruchs 1.

Hinterschnittanker sind Spreizanker, die durch Aufspreizen in einer Hinterschneidung in einem Ankerloch verankert werden. Durch das Aufspreizen sind die Spreizanker durch Formschluss in der Hinterschneidung gegen Herausziehen aus dem Ankerloch gehalten, das heißt, durch Formschluss verankert. Zusätzlich zum Formschluss kann ein Kraftbeziehungsweise Reibschluss im Ankerloch bestehen. "Selbstschneidend" bedeutet, dass der Spreiz- beziehungsweise Hinterschnittanker die Hinterschneidung im Ankerloch selbst erstellt.

Das Patent EP 0 217 053 B1 offenbart einen Hinterschnittanker mit einem stangenförmigen Ankerschaft, der einen kegelstumpfförmigen Spreizkörper an einem vorderen Ende aufweist. Auf dem Ankerschaft ist eine Spreizhülse angeordnet, die an ihrem vorderen, dem Spreizkörper zugewandten Ende durch Längsschlitze in zylinderschalenförmig gewölbte, streifenförmige Spreizelemente unterteilt ist, die durch Aufschieben auf den Spreizkörper radial nach außen geschwenkt werden, was als "Aufspreizen" der Spreizelemente, der Spreizhülse und des Spreizankers aufgefasst werden kann. An vorderen Stirnenden von zwei gegenüberliegenden Spreizelementen sind zylindrische Hartmetallstifte in Bohrungen in den Spreizelementen eingesetzt, die als Schneidelemente schräg nach vorn und außen aus den vorderen Stirnenden der beiden gegenüberliegenden Spreizelemente vorstehen. Durch einen Drehantrieb der Spreizhülse beim Aufschieben auf den Spreizkörper erstellen die beiden Hartmetallstifte eine umlaufende, kegelstumpfförmige Aufweitung in einem ansonsten zylindrischen Ankerloch. Die Aufweitung bildet eine Hinterschneidung, welche die durch das Aufschieben auf den Spreizkörper nach außen geschwenkten, das heißt aufgespreizten Spreizelemente formschlüssig hintergreifen.

Aufgabe der Erfindung ist, das Aufspreizen der Spreizelemente eines Hinterschnittankers der vorstehend erläuterten Art zu verbessern. Insbesondere soll ein Verhältnis einer von einem Spreizkörper auf die Spreizelemente radial nach außen ausgeübten Spreizkraft zu einer zum Aufschieben der Spreizelemente auf den Spreizkörper ausgeübten Axialkraft verbessert, das heißt die Spreizkraft erhöht und/oder die Axialkraft verringert werden.

Diese Aufgabe wird erfindungsgemäß durch die Merkmale des Anspruchs 1 gelöst. Der erfindungsgemäße Hinterschnittanker erstreckt sich entlang einer mittig verlaufenden Längsachse und weist einen Spreizkörper und eine Spreizhülse mit mindestens einem Spreizelement an einem vorderen, dem Spreizkörper zugewandten Ende auf. Vorzugsweise weist die Spreizhülse mehrere über einen Umfang gleichmäßig oder ungleichmäßig verteilt angeordnete Spreizelemente auf. Der Spreizkörper ist insbesondere kegelstumpfförmig, wobei er auch in Längsrichtung ballig oder hohlrund sein kann. Allgemein ist der Spreizkörper so angeordnet und ausgebildet, dass er bei einer Verschiebung der Spreizhülse in Richtung des Spreizkörpers das mindestens eine Spreizelement am vorderen Ende der Spreizhülse radial von der Längsachse weg nach außen schwenkt, was auch als Aufspreizen aufgefasst werden kann.

An einem hinteren, dem mindestens einen Spreizelement abgewandten Ende weist die Spreizhülse eine Formschlusskupplung zu einem durch Formschluss drehfesten Ansetzen eines Drehantriebswerkzeugs zu einem Drehantrieb der Spreizhülse um die Längsachse auf. Die Formschlusskupplung kann beispielsweise nach Art einer Klauenkupplung mit rechteckigen Aussparungen nach Art von Zinnen im hinteren Ende der Spreizhülse ausgebildet sein. Andere Formschlusskupplungen sind ebenso möglich.

Das mindestens eine Spreizelement der Spreizhülse des erfindungsgemäßen Hinterschnittankers weist einen Grundkörper und ein Schneidelement auf, das eine Schneide an einem Außenumfang, das heißt an einer der Längsachse des Hinterschnittankers abgewandten Seite oder Kante des Grundkörpers, zum Erzeugen eines Hinterschnitts in einem Ankerloch aufweist. Das Schneidelement erzeugt den Hinterschnitt, wenn die Spreizhülse beim Aufschieben auf den Spreizkörper drehend angetrieben wird. Durch das Aufschieben des mindestens einen Spreizelements auf den Spreizkörper wird das Spreizelement radial nach außen geschwenkt, wodurch das Schneidelement ebenfalls radial von der Längsachse des Hinterschnittankers entfernt wird. Durch den Drehantrieb der Spreizhülse bewegt sich das Schneidelement umlaufend um die Längsachse herum und erzeugt dabei die Hinterschneidung im Ankerloch.

Von dem Grundkörper des Spreizelements steht erfindungsgemäß ein Kragelement ab, dessen Innenfläche dem Spreizkörper zugewandt ist, derart, dass sich die Innenfläche des Kragelements bei dem Nach-außen-Schwenken an dem Spreizkörper abstützt. Das Kragelement steht insbesondere nach vorne von dem Grundkörper ab. Es bildet insbesondere das vordere Ende des Spreizelements.

Vorzugsweise ist ein hinteres, der Klauenkupplung am hinteren Ende der Spreizhülse zugewandtes Ende des Kragelements an dem Grundkörper des mindestens einen Spreizelements angebunden und ein vorderes Ende des Kragelements frei, derart, dass es radial zum Schneidelement des Spreizelements beweglich ist. Dadurch kann sich das Kragelement durch eine elastische und/oder plastische Biegung an eine "Steigung" des Spreizkörpers, beispielsweise an einen Kegelwinkel eines kegelstumpfförmigen Spreizkörpers, anpassen, wodurch das Kragelement flächig und nicht linienförmig umlaufend mit einer vorderen inneren Kante an dem Spreizkörper anliegt, was zu einem Schaben oder Reiben dieser Kante auf dem Spreizkörper führen könnte. Dadurch, dass das Kragelement nicht linienförmig umlaufend und damit schabend auf dem Spreizkörper an-, respektive aufliegt, wird der Spreizkörper beim Aufspreizen nicht beschädigt. Außerdem ermöglicht die Erfindung eine Anlage des Kragelements am Spreizkörper vor der Schneide des Schneidelements, wodurch sich ein Hebelarm der Anlage des Kragelements am Spreizkörper in Bezug auf die Schneide ergibt, der bei gegebener Spreizkraft zwischen dem Kragelement und dem Spreizkörper eine radial nach außen gerichtete Kraft auf die Schneide erhöht.

Vorzugsweise ist eine vordere äußere, das heißt der Längsachse des Hinterschnittankers ferne Kante des Kragelements bezüglich der Schneide radial nach innen versetzt, das heißt die vordere äußere Kante des Kragelements weist einen kleineren radialen Abstand von der Längsachse des Hinterschnittankers auf als die Schneide. Allgemein kann sich das Kragelement zwischen der Schneide und der Längsachse des Hinterschnittankers, beim Aufschieben auf den Spreizkörper also zwischen der Schneide und dem Spreizkörper, befinden, oder einen kleineren radialen Abstand von der Längsachse des Hinterschnittankers aufweisen als die Schneide. Vorzugsweise steht die Schneide nach vorne über den Grundkörper über.

Insbesondere weist das Kragelement eine gegenüber dem Grundkörper reduzierte Dicke auf, die insbesondere weniger als 50 % der Dicke des Grundkörpers, insbesondere weniger als 30 % der Dicke des Grundkörpers beträgt, wobei die "Dicke" radial zur Längsachse gemessen wird. Durch die reduzierte Dicke ist das Kragelement im Vergleich zum Grundkörper leicht verformbar und das Kragelement kann sich daher gut an die Geometrie des Spreizkörpers anpassen, wodurch eine flächige Anlage erreicht wird.

In Richtung des vorderen Endes reicht die dem Spreizkörper zugewandte Innenseite des Kragelements vorzugsweise bis mindestens zu einer Radialebene des Hinterschnittankers, in der sich die Schneide befindet. Insbesondere steht das Kragelement axial nach vorn über die Schneide über. Dadurch stützt sich das Kragelement beim Aufspreizen in der Radialebene der Schneide und vorzugsweise axial weiter vorn am Spreizkörper ab, was ein Hebelverhältnis beim Aufspreizen verbessert. Diese Ausführung der Erfindung umfasst insbesondere auch, dass die Innenseite des Kragelements axial bereits hinter der Schneide beginnt.

Ein Freiraum zwischen der Schneide und dem Kragelement ermöglicht bei Ausführungen der Erfindung eine Radialbewegung zwischen der Schneide und dem Kragelement, insbesondere kann sich das Kragelement beim Aufspreizen und nach außen Schwenken des Spreizelements mit der Schneide der Schneide radial nähern. Der Freiraum befindet sich insbesondere, bezogen auf die Längsachse, radial zwischen der Schneide und dem Kragelement.

Der Freiraum kann durch einen sich in der Längsrichtung der Spreizhülse erstreckenden Schlitz zwischen der Schneide und der Innenfläche des Kragelements, der an einem vorderen Ende des Spreizelements offen ist, gebildet sein. Der Schlitz kann insbesondere einen, bezogen auf einen Axialschnitt, rechteckigen oder dreiecksförmigen Querschnitt aufweisen.

Vorzugsweise ist der Schlitz derart gestaltet und angeordnet, dass eine Verbindungsgerade, die die Schneide mit der Längsachse verbindet, durch den Grundkörper des Spreizelements verläuft und den Freiraum nicht schneidet. Insbesondere schließt die Verbindungsgerade mit der Längsachse einen Winkel von mindestens 35°, insbesondere von mindestens 45° ein.

Weiterhin ist bevorzugt, dass auf einer Außenseite des Grundkörpers der Spreizhülse eine Ringstufe angeordnet ist, durch die ein dickenreduzierter Bereich des Grundkörpers gebildet ist, auf dem das Schneidelement angeordnet ist. Die Ringstufe kann radial oder unter einem Winkel zur Längsachse verlaufen, wobei der mit der Längsachse eingeschlossene Winkel insbesondere größer als 45° ist.

Vorzugsweise besteht das Schneidelement aus einem Material größerer Härte als die Spreizhülse, das Spreizelement, dessen Grundkörper oder das Kragelement. Das Spreizelement kann beispielsweise einen Hartmetallkörper als Schneidelement aufweisen oder das Schneidelement kann durch eine Auftragsschweißung mit einem Schweißwerkstoff, dessen Härte größer als die der Spreizhülse, des Spreizelements, dessen Grundkörpers oder des Kragelements ist, hergestellt sein. Das Auftragsschweißen hat den Vorteil, dass kein Loch, keine Vertiefung oder dergleichen als Aufnahme für beispielsweise einen Hartmetallkörper als Schneidelement im Spreizelement notwendig ist. Die Aufzählung ist beispielhaft und nicht abschließend.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels, sondern einen grundsätzlich beliebigen Teil der gekennzeichneten Merkmale des Ausführungsbeispiels aufweisen, sind möglich.

Die Erfindung wird nachfolgend anhand eines in der Zeichnung dargestellten Ausführungsbeispiels näher erläutert. Es zeigen:
- Figur 1: einen erfindungsgemäßen selbstschneidenden Hinterschnittanker, wobei eine Spreizhülse des Hinterschnittankers in einem Halbschnitt gezeichnet ist;
- Figur 2: eine Vergrößerung einer Einzelheit II aus Figur 1;
- Figur 3: eine Verankerung des Hinterschnittankers aus Figur 1 in einem Ankerloch;
- Figur 4: die Einzelheit II aus Figur 1 einer abgewandelten Ausführungsform der Erfindung;
- Figur 5: die Einzelheit II aus Figur 1 einer weiteren abgewandelten Ausführungsform der Erfindung; und
- Figur 6: die Einzelheit II aus Figur 1 einer weiteren Ausführungsform der Erfindung.

Grundsätzlich sind in den Figuren gleiche Teile mit gleichen Bezugszahlen versehen.

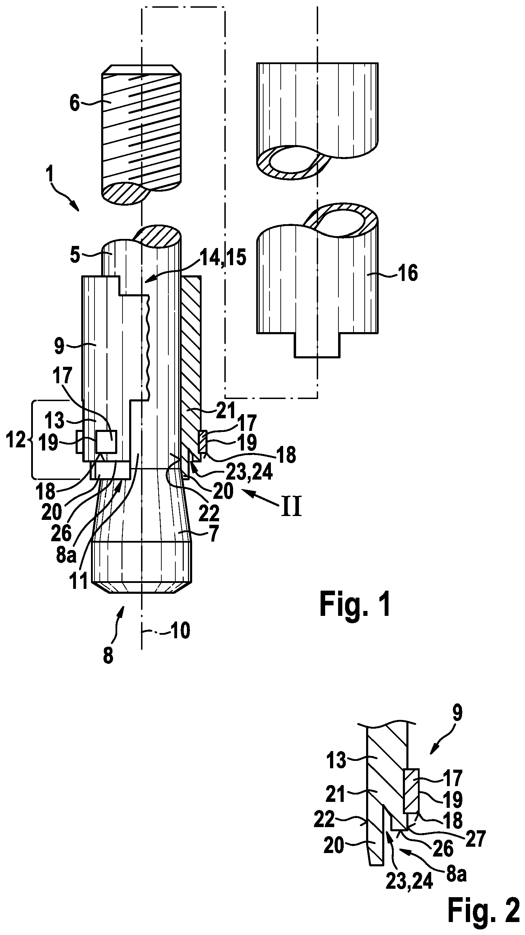

Der in Figur 1 dargestellte, erfindungsgemäße, selbstschneidende Hinterschnittanker 1 ist zu einer Verankerung in einem insbesondere zylindrischen Ankerloch 2 vorgesehen, wobei der Hinterschnittanker 1 eine Hinterschneidung 3 in dem Ankerloch 2 erstellt, die der Hinterschnittanker 1 formschlüssig hintergreift. Das Ankerloch 3 ist beispielsweise in einen Ankergrund 4 aus beispielsweise Beton, Stein oder Mauerwerk gebohrt.

Der Hinterschnittanker 1 weist einen Ankerschaft 5 mit einem Gewinde 6 und mit einem kegelstumpfförmigen Spreizkörper 7 an einem vorderen Ende 8 des Hinterschnittankers 1 und eine auf dem Ankerschaft 5 angeordnete Spreizhülse 9 auf. Der Spreizkörper 7 erweitert sich nach vorne hin im Durchmesser. Der Ankerschaft 5, der Spreizkörper 7 und die Spreizhülse 9 sind koaxial zu einer Längsachse 10 des Hinterschnittankers 1.

Die Spreizhülse 9 weist Längsschlitze 11 auf, die sich von einem vorderen, dem Spreizkörper 7 zugewandten Ende 8a der Spreizhülse 9 ausgehend über einen (Bruch-) Teil einer axialen Länge der Spreizhülse 9 erstrecken. Die Längsschlitze 11 müssen sich nicht - wie im Ausführungsbeispiel - gerade in Axialebenen der Spreizhülse 9 erstrecken, sondern können beispielsweise auch wendelförmig in einem Winkel zu den Axialebenen, wellenförmig oder zickzack-förmig verlaufen. Die Aufzählung ist beispielhaft und nicht abschließend. Durch die Längsschlitze 11 ist die Spreizhülse 9 in einem Spreizabschnitt 12, der an dem vorderen, dem Spreizkörper 7 zugewandten Ende der Spreizhülse 9 beginnt und sich über den (Bruch-) Teil der Spreizhülse 9 erstreckt, in Spreizelemente 13 unterteilt. Die Spreizelemente 13 können im Ausführungsbeispiel als Laschen oder Zungen aufgefasst werden, die in einer Umfangsrichtung der Spreizhülse 9 zylinderschalenförmig gewölbt sind und die sich in Richtung des kegelstumpfförmigen Spreizkörpers 7 erstrecken, wo die Spreizelemente 13 freie Enden aufweisen. Durch eine Axialverschiebung der Spreizhülse 9 in Richtung der Längsachse 10 auf dem Ankerschaft 5 in Richtung zum Spreizkörper 7 hin werden die Spreizelemente 13 der Spreizhülse 9 auf den Spreizkörper 7 aufgeschoben. Beim Aufschieben drückt der Spreizkörper 7, der sich in der beschriebenen Verschieberichtung der Spreizhülse 9 erweitert, die Spreizelemente 13 der Spreizhülse 9 radial auseinander, wodurch die vorderen Enden der Spreizelemente 13 von der Längsachse 10 des Hinterschnittankers 1 weg nach außen geschwenkt werden. Das Auseinanderschwenken der Spreizelemente 13 kann auch als Aufspreizen der Spreizhülse 9 beziehungsweise des Hinterschnittankers 1 aufgefasst werden.

An einem hinteren, dem Spreizkörper 7 abgewandten Ende weist die Spreizhülse 9 rechteckige Aussparungen 14 auf, wodurch das hintere Ende der Spreizhülse 9 als Formschlusskupplung 15 nach Art einer Klauenkupplung ausgebildet ist. Die Formschlusskupplung 15 dient einem Drehantrieb der Spreizhülse 9 mit einem rohrförmigen Drehantriebswerkzeug 16, dessen der Spreizhülse 9 zugewandtes Ende gegengleich zur Formschlusskupplung 15 der Spreizhülse 9 ausgebildet ist. Das Drehantriebswerkzeug 16 lässt sich auf den Ankerschaft 5 aufschieben und in einen durch Formschluss drehfesten Eingriff mit der Formschlusskupplung 15 der Spreizhülse 9 bringen, wodurch die Spreizhülse 9 durch einen Drehantrieb des Drehantriebswerkzeugs 16 drehend antreibbar ist. Durch einen axialen Vorschub des Drehantriebswerkzeugs 16 in Richtung der Längsachse 10 des Hinterschnittankers 1 auf dem Ankerschaft 5 in Richtung des Spreizkörpers 7 lässt sich die Spreizhülse 9 in Richtung des Spreizkörpers 7 verschieben und die Spreizelemente 13 auf den Spreizkörper 7 aufschieben, wodurch sie in oben beschriebener Weise von der Längsachse 10 weg nach außen geschwenkt, das heißt aufgespreizt werden. Die Formschlusskupplung 15 der Spreizhülse 9 kann anders ausgebildet sein, notwendig sind ein Drehantrieb und ein Vorschub der Spreizhülse 9.

Wie in der Vergrößerung der Figur 2 zu sehen ist, weisen die Spreizelemente 13 der Spreizhülse 9 an ihren Außenseiten 27 Schneidelemente 17 mit Schneiden 18 an dem Spreizkörper 7 zugewandten vorderen Enden 8a an einem Außenumfang auf. In den Figuren 1 und 2 sind die Schneidelemente 17 Hartmetallplatten, die in komplementären Aussparungen im Außenumfang der Spreizelemente 13 angeordnet und beispielsweise durch Hartlöten festgelegt sind. Es muss nicht jedes der Spreizelemente 13 ein Schneidelement 17 aufweisen, sondern es genügt, wenn mindestens ein Spreizelement 13 ein Schneidelement 17 aufweist. Vorzugsweise weisen mehrere oder alle Spreizelemente 13 jeweils ein oder eventuell auch mehrere Schneidelemente 17 auf. Die Schneiden 18 verlaufen in der Umfangsrichtung und können sich an axial vorderen Enden 8a der Spreizelemente 13 befinden oder - wie im Ausführungsbeispiel - gegenüber den vorderen Enden der Spreizelemente 13 vom Spreizkörper 7 weg zurückversetzt sein. An ihren Längsrändern weisen die Schneidelemente 17 in der Längsrichtung oder schräg zur Längsrichtung des Hinterschnittankers 1 verlaufende Nebenschneiden 19 auf.

Zu einer Verankerung in dem Ankergrund 4 wird der Hinterschnittanker 1 mit seinem Spreizkörper 7 voraus in das Ankerloch 2 eingebracht, bis der Spreizkörper 7 beziehungsweise das vordere Ende 8 des Ankerschafts 5 auf einem Lochgrund des Ankerlochs 2 aufsitzt. Die Spreizhülse 9 wird auf dem Ankerschaft 5 mit dem Drehantriebswerkzeug 16 oder auch in anderer Weise drehend angetrieben und in Richtung der Längsachse 10 in Richtung des Spreizkörpers 7 vorgeschoben, wodurch die Spreizelemente 13 auf den Spreizkörper 7 aufgeschoben und vom Spreizkörper 7 von der Längsachse 10 des Hinterschnittankers 1 weg nach außen geschwenkt werden. Die Schneiden 18 und gegebenenfalls die Nebenschneiden 19 der Schneidelemente 17 dringen in eine Lochwand des Ankerlochs 2 ein und erstellen durch die Drehung und den axialen Vorschub eine umlaufende, kegelstumpfförmige Aufweitung, die die Hinterschneidung 3 bildet. Nachdem die Hinterschneidung 3 erstellt worden ist, wird das Drehantriebswerkzeug 16 vom Ankerschaft 5 abgezogen. Die in die Hinterschneidung 3 geschwenkten, das heißt aufgespreizten Spreizelemente 13 hintergreifen die Hinterschneidung 3, wodurch sie den Hinterschnittanker 1 durch Formschluss in der Hinterschneidung 3 im Ankerloch 2 halten; der erfindungsgemäße, selbstschneidende Hinterschnittanker 1 ist durch Formschluss im Ankerloch 2 verankert.

An einer Innenseite weisen die Spreizelemente 13 jeweils ein Kragelement 20 auf, dessen hinteres, dem Spreizkörper 7 abgewandtes Ende einstückig in das Spreizelement 13 übergeht und die von den Spreizelementen 13 nach vorn in Richtung des Spreizkörpers 7 abstehen. Ein Bereich der Spreizelemente 13 außerhalb der Kragelemente 20 wird hier als Grundkörper 21 der Spreizelemente 13 bezeichnet. Der Grundkörper 21 der Spreizelemente 13 weist die Aussparungen mit den Schneidelementen 17 auf, die auf der Außenseite 27 des Grundkörpers 21 angeordnet sind. Die Kragelemente 20 sind durch Schlitze 23 in den Spreizelementen 13 der Spreizhülse 9 gebildet, die von den dem Spreizkörper 7 zugewandten Enden der Spreizelemente 13 ein Stück weit in der Längsrichtung in die Spreizelemente 13 hineinreichen. Die Schlitze 23 bilden Freiräume 24 zwischen den Grundkörpern 21 radial außen und den Kragelementen 20 radial innen an den Schlitzen 23 beziehungsweise Freiräumen 24. Die die Freiräume 24 bildenden Schlitze 23 ermöglichen eine radiale Bewegung zwischen den Grundkörpern 21 der Spreizelemente 13 mit den Schneiden 18 und Nebenschneiden 19 der Schneidelemente 17 einerseits und den Kragelementen 20 andererseits.

Vordere, radial äußere Kanten der Kragelemente 20 weisen einen kleineren radialen Abstand von der Längsachse 10 des Hinterschnittankers 1 auf als die Schneiden 18 und Nebenschneiden 19 der Schneidelemente 17. Die vorderen Enden der Kragelemente 20 bilden das vordere Ende der Spreizhülse 9.

Innenflächen 22 der Kragelemente 20 sind dem Spreizkörper 7 zugewandt derart, dass beim Aufschieben der Spreizelemente 13 die Innenflächen 22 der Kragelemente 20 an einer konischen Umfangsfläche des Spreizkörpers 7 entlang gleiten. Dabei stützen sich die Kragelemente 20 mit ihren Innenflächen 22 am Spreizkörper 7 ab. Durch den Freiraum 24 zwischen den Kragelementen 20 und den Grundkörpern 21 der Spreizelemente 13 können die Kragelemente 20 gegenüber den Grundkörpern 21 nach außen schwenken beziehungsweise biegen. Beim Aufschieben auf den Spreizkörper 7 schwenken beziehungsweise biegen sich die Kragelemente 20 nach außen, wodurch sie sich an eine "Steigung" des Spreizkörpers 7 anpassen und flächig mit der Innenfläche 22 anstatt nur mit ihrer vorderen Innenkante am Spreizkörper 7 anliegen. Die "Steigung" ist ein schräger Verlauf der Umfangsfläche des Spreizkörpers 7 in einem Winkel zu der Längsachse 10 des Hinterschnittankers 1 aufgrund seiner Kegelstumpfform.

Die Kragelemente 20 stehen in der Längsrichtung nach vorn in Richtung des Spreizkörpers 7 über den Grundkörper 21 der Spreizelemente 13 und über eine Radialebene, in der sich die Schneiden 18 der Schneidelemente 17 befinden, über. Dadurch stützen die Kragelemente 20 die Spreizelemente 13 in axialer Richtung vor den Schneiden 18 am Spreizkörper 7 ab. Dadurch ergibt sich ein Hebelarm, wodurch eine Spreizkraft, mit der der Spreizkörper 7 die Spreizelemente 13 radial nach außen drückt, kleiner als eine Spreizkraft ist, mit der die Schneiden 18 der Schneidelemente 17 beim Aufspreizen im Ankerloch 2 radial nach außen gegen die Lochwand des Ankerlochs 2 gedrückt werden. Die nach vorn in Richtung des Spreizkörpers 7 überstehenden Kragelemente 20 verstärken die Spreizkraft, mit der die Schneiden 18 beim Aufspreizen nach außen gegen beziehungsweise in die Lochwand des Ankerlochs 2 gedrückt werden.

Die aus Hartmetall bestehenden Schneidelemente 17 weisen eine größere Härte als die Spreizelemente 13 auf, die wie die Spreizhülse 9 insgesamt beispielsweise aus einem Baustahl bestehen.

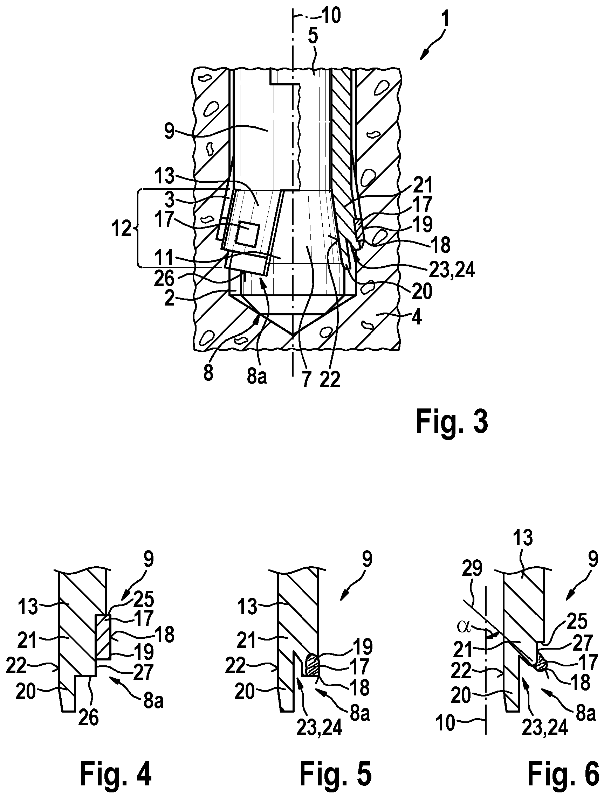

Bei der in Figur 4 dargestellten Abwandlung des erfindungsgemäßen Hinterschnittankers 1 sind die Schneidelemente 17 "stehend", das heißt in Axialebenen des Hinterschnittankers 1, anstatt wie in Figur 3 "liegend", das heißt tangential zum Hinterschnittanker 1, am Außenumfang der Spreizelemente 13 der Spreizhülse 9 des Hinterschnittankers 1 angeordnet. Die in Figur 4 ebenso wie in Figur 3 als Hartmetallplatten ausgeführten Schneidelemente 17 sind in Figur 4 an einer umlaufenden Ringstufe 25 der Spreizelemente 13 angeordnet, die die Schneidelemente 17 in axialer Richtung stützt. Durch ihre "stehende" Anordnung bilden radial zur Längsachse 10 des Hinterschnittankers 1 und eine in der Längsrichtung des Hinterschnittankers 1 verlaufende, der Längsachse 10 des Hinterschnittankers 1 ferne Kanten die Schneiden 18 der Schneidelemente 17.

Unter Bildung einer weiteren Ringstufe 26 stehen bei der in Figur 4 dargestellten Ausführungsform des erfindungsgemäßen Hinterschnittankers 1 die Kragelemente 20 von vorderen Stirnenden der Grundkörper 21 der Spreizelemente 13 nach vorn in Richtung des Spreizkörpers 7 von den Grundkörpern 21 ab. Die Innenflächen 22 der Spreizelemente 13 setzen sich ohne Stufe von den Grundkörpern 21 zu den Kragelementen 20 fort.

In Figur 4 besteht kein Schlitz oder Freiraum zwischen den Kragelementen 20 und den Grundkörpern 21 der Spreizelemente 13 der Spreizhülse 9. Die nach vorn in Richtung des Spreizkörpers 7 abstehenden Kragelemente 20 sind durch Biegung beim Aufschieben auf den Spreizkörper 7 zum Aufspreizen der Spreizelemente 13 von der Längsachse 10 des Hinterschnittankers 1 weg nach außen schwenk- beziehungsweise biegbar. In der Längsrichtung des Hinterschnittankers 1 stehen die Kragelemente 20 in Figur 4 nach vorn in Richtung des Spreizkörpers 7 über die Schneiden 18 der Schneidelemente 17 über, das heißt die Kragelemente 20 stehen über eine gedachte Radialebene, an vorderen Enden der Schneiden 18 über. Beim Aufspreizen stützt der Spreizkörper 7 dadurch die Spreizelemente 13 an den Kragelementen 20 axial vor den Schneiden 18 der Schneidelemente 17 ab, wodurch sich ein Hebel ergibt, der die radial nach außen gerichtete Spreizkraft, die die Schneiden 18 nach außen gegen die Lochwand des Ankerlochs 2 beaufschlagt, gegenüber der radial nach außen gerichteten Spreizkraft, die der Spreizkörper 7 an den Kragelementen 20 auf die Spreizelemente 13 ausübt, vergrößert.

Bei der in Figur 5 dargestellten Ausführungsform der Erfindung bestehen wie in Figur 3 Schlitze 23 in den Spreizelementen 13 der Spreizhülse 9, die von den vorderen, dem Spreizkörper 7 zugewandten Enden der Spreizelemente 13 ein Stück weit in der Längsrichtung des Hinterschnittanker 1 in die Spreizelemente 13 hineinreichen. Die Schlitze 23 bilden Freiräume 24 zwischen den Grundkörpern 21 und den Kragelementen 20 der Spreizelemente 13, die die Kragelemente 20 von den Grundkörpern 21 abgrenzen. Durch die Schlitze 23 beziehungsweise Freiräume 24 sind die Kragelemente 20 gegenüber den Grundkörpern 21 der Spreizelemente 13 von der Längsachse 10 des Hinterschnittankers 1 weg nach außen schwenk- beziehungsweise biegbar.

In Figur 5 sind die Schneidelemente 17 durch Auftragsschweißen und anschließendes Schleifen in eine gewünschte Form hergestellt. Ein Schweißwerkstoff und damit die Schneidelemente 17 sind härter als die Spreizhülse 9 und deren Spreizelemente 13.

Bei der in Figur 6 dargestellten Ausführungsform ist der Freiraum 24 derart angeordnet, dass eine Verbindungsgerade 29, die die Schneide 18 mit der Längsachse 10 verbindet, durch den Grundkörper 21 verläuft, aber den Freiraum 24 nicht schneidet, wobei die Verbindungsgerade 29 mit der Längsachse 10 einen Winkel α von 50° einschließt. Die Schneide 18 ist auf einer Außenseite 27 eines dickenreduzierten Bereichs 28 des Grundkörpers 21 angeordnet und steht nach vorn über den Grundkörper 21 über. Eine radial zur Längsachse 10 verlaufende Ringstufe 25 ist auf der Außenseite 27 des Grundkörpers 21 ausgebildet und kennzeichnet den Übergang zum dickenreduzierten Bereich 28.

### Bezugszeichenliste

- 1: Hinterschnittanker
- 2: Ankerloch
- 3: Hinterschneidung
- 4: Ankergrund
- 5: Ankerschaft
- 6: Gewinde
- 7: Spreizkörper
- 8, 8a: vorderes Ende
- 9: Spreizhülse
- 10: Längsachse
- 11: Längsschlitz
- 12: Spreizabschnitt
- 13: Spreizelement
- 14: Aussparung
- 15: Formschlusskupplung
- 16: Drehantriebswerkzeug
- 17: Schneidelement
- 18: Schneide
- 19: Nebenschneide
- 20: Kragelement
- 21: Grundkörper
- 22: Innenfläche
- 23: Schlitz
- 24: Freiraum
- 25: Ringstufe
- 26: weitere Ringstufe
- 27: Außenseite des Grundkörpers 21
- 28: dickenreduzierter Bereich des Grundkörpers 21
- 29: Verbindungsgerade
- α: Winkel

## Patentansprüche

1. Selbstschneidender Hinterschnittanker (1), der sich entlang einer Längsachse (10) erstreckt, mit einem Spreizkörper (7) und mit einer Spreizhülse (9), die an einem vorderen Ende (8) mindestens ein Spreizelement (13) aufweist, das durch Aufschieben der Spreizhülse (9) in Richtung der Längsachse (10) des Hinterschnittankers (1) nach vorne auf den Spreizkörper (7) von der Längsachse (10) weg nach außen schwenkbar ist, wobei die Spreizhülse (9) hinten eine Formschlusskupplung (15) zu einem durch Formschluss drehfesten Ansetzen eines Drehantriebswerkzeugs (16) zu einem Drehantrieb der Spreizhülse (9) um die Längsachse (10) aufweist und wobei das Spreizelement (13) einen Grundkörper (21) mit einem Schneidelement (17), das eine Schneide (18, 19) an einem Außenumfang zum Erzeugen eines Hinterschnitts (3) in einem Ankerloch (2) durch Drehen und gleichzeitiges Aufschieben der Spreizhülse (9) auf den Spreizkörper (7) aufweist, **dadurch gekennzeichnet, dass** von dem Grundkörper (21) des Spreizelements (13) ein Kragelement (20) absteht, dessen Innenfläche (22) dem Spreizkörper (7) zugewandt ist derart, dass sich die Innenfläche (22) des Kragelements (20) beim Nach-außen-Schwenken des Spreizelements (13) an dem Spreizkörper (7) abstützt.

2. Selbstschneidender Hinterschnittanker (1) nach Anspruch 1, **dadurch gekennzeichnet, dass** eine vordere äußere Kante des Kragelements (20) einen geringeren radialen Abstand von der Längsachse (10) aufweist als die Schneide (18, 19) des Schneidelements (17).

3. Selbstschneidender Hinterschnittanker (1) nach Anspruch 1 oder 2, **dadurch gekennzeichnet, dass** ein radial innerer Bereich des Kragelements (20) in Richtung der Längsachse (10) des Hinterschnittankers (1) mindestens bis zu einer Radialebene des Hinterschnittankers (1), in der sich die Schneide (18) befindet, reicht und vorzugsweise axial nach vorn über die Schneide (18) übersteht.

4. Selbstschneidender Hinterschnittanker (1) nach einem oder mehreren der Ansprüche 1 bis 3, **dadurch gekennzeichnet, dass** das Spreizelement (13) einen Freiraum (24) zwischen der Schneide (18) und dem Kragelement (20), insbesondere radial zwischen der Schneide (18) und dem Kragelement (20) aufweist.

5. Selbstschneidender Hinterschnittanker (1) nach Anspruch 4, **dadurch gekennzeichnet, dass** das Spreizelement (13) einen sich in einer Längsrichtung der Spreizhülse (9) erstreckenden Schlitz (23) zwischen der Schneide (18, 19) und der Innenfläche (22) des Kragelements (20), der an einem vorderen Ende (8a) des Spreizelements (13) offen ist, als Freiraum (24) zwischen der Schneide (18, 19) und der Innenfläche (22) des Kragelements (20) aufweist.

6. Selbstschneidender Hinterschnittanker (1) nach Anspruch 4 oder 5, **dadurch gekennzeichnet, dass** eine Verbindungsgerade (29), die die Schneide (18) mit der Längsachse (10) verbindet, durch den Grundkörper (21) verläuft und den Freiraum (24) nicht schneidet, mit der Längsachse (10) einen Winkel (α) von mindestens 35°, insbesondere von mindestens 45° einschließt.

7. Selbstschneidender Hinterschnittanker (1) nach einem oder mehreren der vorhergehenden Ansprüche, **dadurch gekennzeichnet, dass** die Schneide (18) nach vorn über den Grundkörper (21) übersteht.

8. Selbstschneidender Hinterschnittanker (1) nach einem oder mehreren der vorhergehenden Ansprüche, **dadurch gekennzeichnet, dass** auf einer Außenseite (27) des Grundkörpers (21) der Spreizhülse (9) eine Ringstufe (25) angeordnet ist, durch die ein dickenreduzierter Bereich (28) des Grundkörpers (21) gebildet ist, auf dem das Schneidelement (17) angeordnet ist.

9. Selbstschneidender Hinterschnittanker (1) nach einem oder mehreren der vorhergehenden Ansprüche, **dadurch gekennzeichnet, dass** das Schneidelement (17) eine größere Härte als der Grundkörper (21) des Spreizelements (13) aufweist.

10. Selbstschneidender Hinterschnittanker (1) nach einem oder mehreren der vorhergehenden Ansprüche, **dadurch gekennzeichnet, dass** das Schneidelement (17) an dem mindestens einen Spreizelement (13) aufgeschweißt, insbesondere durch Auftragschweißen hergestellt ist.

## Claims

1. Self-cutting undercut anchor (1), which extends along a longitudinal axis (10), with an expansion body (7) and with an expansion sleeve (9), which has at least one expansion element (13) at a front end (8), which can be swivelled outwards away from the longitudinal axis (10) by pushing the expansion sleeve (9) forwards onto the expansion body (7) in the direction of the longitudinal axis (10) of the undercut anchor (1), wherein the expanding sleeve (9) has a positive-locking coupling (15) at the rear for a non-rotatable attachment of a rotary drive tool (16) by positive locking for a rotary drive of the expanding sleeve (9) about the longitudinal axis (10) and wherein the expanding element (13) has a base body (21) with a cutting element (17), which has a cutting edge (18, 19) on an outer circumference for producing an undercut (3) in an anchor hole (2) by rotating and simultaneously pushing the expanding sleeve (9) onto the expanding body (7), **characterised in that in that** a cantilever element (20) projects from the base body (21) of the expanding element (13), the inner surface (22) of which cantilever element faces the expanding body (7) in such a way that the inner surface (22) of the cantilever element (20) is supported on the expanding body (7) when the expanding element (13) is swivelled outwards.

2. Self-cutting undercut anchor (1) according to claim 1, **characterised in that** a front outer edge of the cantilever element (20) has a smaller radial distance from the longitudinal axis (10) than the cutting edge (18, 19) of the cutting element (17).

3. Self-cutting undercut anchor (1) according to claim 1 or 2, **characterised in that** a radially inner region of the cantilever element (20) extends in the direction of the longitudinal axis (10) of the undercut anchor (1) at least up to a radial plane of the undercut anchor (1), in which the cutting edge (18) is located, and preferably projects axially forwards beyond the cutting edge (18).

4. Self-cutting undercut anchor (1) according to one or more of claims 1 to 3, **characterised in that** the expansion element (13) has a free space (24) between the cutting edge (18) and the cantilever element (20), in particular radially between the cutting edge (18) and the cantilever element (20).

5. Self-cutting undercut anchor (1) according to claim 4, **characterised in that** the expanding element (13) has a slot (23) extending in a longitudinal direction of the expanding sleeve (9) between the cutting edge (18, 19) and the inner surface (22) of the cantilever element (20), which is open at a front end (8a) of the expanding element (13), as a free space (24) between the cutting edge (18, 19) and the inner surface (22) of the cantilever element (20).

6. Self-cutting undercut anchor (1) according to claim 4 or 5, **characterised in that** a connecting straight line (29), which connects the cutting edge (18) to the longitudinal axis (10), runs through the base body (21) and does not intersect the free space (24), encloses an angle (α) of at least 35°, in particular of at least 45°, with the longitudinal axis (10).

7. Self-cutting undercut anchor (1) according to one or more of the preceding claims, **characterised in that** the cutting edge (18) projects forwards beyond the base body (21).

8. Self-cutting undercut anchor (1) according to one or more of the preceding claims, **characterised in that** an annular step (25) is arranged on an outer side (27) of the base body (21) of the expanding sleeve (9), by means of which annular step a thickness-reduced region (28) of the base body (21) is formed, on which the cutting element (17) is arranged.

9. Self-cutting undercut anchor (1) according to one or more of the preceding claims, **characterised in that** the cutting element (17) has a greater hardness than the base body (21) of the expanding element (13).

10. Self-cutting undercut anchor (1) according to one or more of the preceding claims, **characterised in that** the cutting element (17) is welded onto the at least one expanding element (13), in particular is produced by build-up welding.

## Revendications

1. Ancrage autotaraudeur à contre-dépouille (1) s'étendant le long d'un axe longitudinal (10), comprenant un corps d'expansion (7) et une douille d'expansion (9) qui présente, à une extrémité avant (8), au moins un élément d'expansion (13), qui, par poussée de la douille d'expansion (9) dans la direction de l'axe longitudinal (10) de l'ancrage à contre-dépouille (1), peut pivoter vers l'avant sur le corps d'expansion (7) en s'éloignant de l'axe longitudinal (10) vers l'extérieur, dans lequel la douille d'expansion (9) présente à l'arrière un accouplement par complémentarité de forme (15) pour la mise en place, par complémentarité de forme, d'un outil d'entraînement en rotation (16) destiné à entraîner en rotation la douille d'expansion (9) autour de l'axe longitudinal (10) et dans lequel l'élément d'expansion (13) présente un corps de base (21) avec un élément de coupe (17) qui présente une arête de coupe (18, 19) sur un pourtour extérieur pour créer une contre-dépouille (3) dans un trou d'ancrage (2) par rotation et enfilage simultané de la douille d'expansion (9) sur le corps d'expansion (7), **caractérisé en ce qu'**un élément en porte-à-faux (20) fait saillie du corps de base (21) de l'élément d'expansion (13), dont la surface intérieure (22) est tournée vers le corps d'expansion (7) de telle sorte que la surface intérieure (22) de l'élément en porte-à-faux (20) s'appuie sur le corps d'expansion (7) lors du pivotement vers l'extérieur de l'élément d'expansion (13).

2. Ancrage autotaraudeur à contre-dépouille (1) selon la revendication 1, **caractérisé en ce qu'**un bord extérieur avant de l'élément en porte-à-faux (20) présente une distance radiale par rapport à l'axe longitudinal (10) inférieure à celle de la arête de coupe (18, 19) de l'élément de coupe (17).

3. Ancrage autotaraudeur à contre-dépouille (1) selon la revendication 1 ou 2, **caractérisé en ce qu'** qu'une zone radialement intérieure de l'élément en porte-à-faux (20) s'étend dans la direction de l'axe longitudinal (10) de l'ancrage à contre-dépouille (1) au moins jusqu'à un plan radial de l'ancrage à contre-dépouille (1) dans lequel se trouve l'arête de coupe (18) et dépasse de préférence axialement vers l'avant au-delà de l'arête de coupe (18).

4. Ancrage autotaraudeur à contre-dépouille (1) selon une ou plusieurs des revendications 1 à 3, **caractérisé en ce que** l'élément d'expansion (13) présente un espace libre (24) entre l'arête de coupe (18) et l'élément en porte-à-faux (20), en particulier radialement entre l'arête de coupe (18) et l'élément en porte-à-faux (20).

5. Ancrage autotaraudeur à contre-dépouille (1) selon la revendication 4, **caractérisé en ce que** l'élément d'expansion (13) présente une fente (23) s'étendant dans une direction longitudinale de la douille d'expansion (9) entre l'arête de coupe (18, 19) et la surface intérieure (22) de l'élément en porte-à-faux (20), qui est ouverte à une extrémité avant (8a) de l'élément d'écartement (13), comme espace libre (24) entre l'arête de coupe (18, 19) et la surface intérieure (22) de l'élément en porte-à-faux (20).

6. Ancrage autotaraudeur à contre-dépouille (1) selon la revendication 4 ou 5, **caractérisé en ce que en ce qu'**une droite de liaison (29) qui relie l'arête de coupe (18) à l'axe longitudinal (10) passe à travers le corps de base (21) et ne coupe pas l'espace libre (24), forme avec l'axe longitudinal (10) un angle (α) d'au moins 35°, en particulier d'au moins 45°.

7. Ancrage autotaraudeur à contre-dépouille (1) selon une ou plusieurs des revendications précédentes, **caractérisé en ce que** l'arête de coupe (18) dépasse vers l'avant au-delà du corps de base (21).

8. Ancrage autotaraudeur à contre-dépouille (1) selon une ou plusieurs des revendications précédentes, **caractérisée en ce qu'**un épaulement annulaire (25) est disposé sur une face extérieure (27) du corps de base (21) de la douille d'expansion (9), épaulement qui forme une zone (28) de réduction d'épaisseur du corps de base (21) sur laquelle est disposé l'élément de coupe (17).

9. Ancrage autotaraudeur à contre-dépouille (1) selon une ou plusieurs des revendications précédentes, **caractérisé en ce que** l'élément de coupe (17) présente une dureté supérieure à celle du corps de base (21) de l'élément d'expansion (13).

10. Ancrage autotaraudeur à contre-dépouille (1) selon une ou plusieurs des revendications précédentes, **caractérisé en ce que** l'élément de coupe (17) est soudé sur au moins un élément d'expansion (13), en particulier par soudage par apport.
